(19)

**Europäisches Patentamt**
**European Patent Office**
**Office européen des brevets**

(11)  **EP 3 301 902 A1**

(12)  **EUROPEAN PATENT APPLICATION**

(43)  Date of publication:
04.04.2018  Bulletin 2018/14

(51)  Int Cl.:
*H04N 1/60* (2006.01)    *H04N 9/67* (2006.01)

(21)  Application number: 16306248.2

(22)  Date of filing: 28.09.2016

(84)  Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71)  Applicant: **Thomson Licensing**
**92130 Issy-les-Moulineaux (FR)**

(72)  Inventors:
• **STAUDER, Jurgen**
**35576 CESSON-SÉVIGNÉ (FR)**
• **THEBAULT, Cédric**
**35576 CESSON-SÉVIGNÉ (FR)**
• **POREE, Corinne**
**35576 CESSON-SÉVIGNÉ (FR)**

(74)  Representative: **Browaeys, Jean-Philippe**
**TECHNICOLOR**
**1-5, rue Jeanne d'Arc**
**92130 Issy-les-Moulineaux (FR)**

(54)  **LIGHTNESS INDEPENDENT NON-LINEAR RELATIVE CHROMA MAPPING**

(57)  In this color mapping method, each source color having a lightness L is mapped in a constant-hue leaf into a target color having a lightness L' such that its chroma C is mapped into a chroma $C'' = C_{\max}^{TARGET} \cdot g\left(\dfrac{C}{C_{\max}^{SOURCE}}\right)$, where, in this leaf, $C_{\max}^{SOURCE}$ is the chroma of a color having the lightness L and positioned on the boundary of a source color gamut, $C_{\max}^{TARGET}$ is the chroma of a color having the lightness L' and positioned on the boundary of a target color gamut. g() is a relative chroma mapping function which is continuous and monotonically increasing in the interval [0,1], non-linear, and independent from the lightness L.

Fig.3

Printed by Jouve, 75001 PARIS (FR)

**Description**

Technical Field

The invention concerns a method for mapping source colors of a content into target colors from a source color gamut towards a target color gamut that comprises a chroma mapping step using a specific relative chroma mapping function.

Background Art

The aim of a color gamut mapping is to redistribute the source colors belonging to a source color gamut (for example the extended color gamut of a film) into a target color gamut (for example the color gamut of a standard television monitor). As the shape and boundaries of a target color gamut are generally different from those of the source color gamut, at least some of the target colors that are obtained after such a mapping are different from their corresponding source colors.

Morovic and Luo give a comprehensive overview on gamut mapping algorithms. Montag and Fairchild as well as Zolliker present comprehensive comparisons and evaluate different approaches. See notably the following references:

- J. Morovic and M. R. Luo, "The Fundamentals of Gamut Mapping: A Survey", Journal of Imaging Science and Technology, 45/3:283-290, 2001.
- Montag E. D., Fairchild M. D, "Psychophysical Evaluation of Gamut Mapping Techniques Using Simple Rendered Images and Artificial Gamut Boundaries", IEEE Trans. Image Processing, 6:977-989, 1997.
- P. Zolliker, M. Dätwyler, K. Simon, On the Continuity of Gamut Mapping Algorithms, Color Imaging X: Processing, Hardcopy, and Applications. Edited by Eschbach, Reiner; Marcu, Gabriel G. Proceedings of the SPIE, Volume 5667, pp. 220-233, 2004.

Gamut mapping changes image colors, notably according device constraints have that have to be met. There is no "zero error" or "no degradation" gamut mapping method. Gamut mapping impacts an image as artwork. Gamut mapping for automatic color conversion has therefore to be designed considering artistic requirements or it should be a tool used by the colorist among other.

An application area of color gamut mapping is notably video content production and post-production. For example, an original version of a video content needs to be converted into specific versions adapted for different types of reproduction or transmission: for example, a specific version for cinema, another for television, and a third one for internet. These different versions can be prepared by manual color correction or/and by application of gamut and tone mapping algorithms.

Among the requirements for color gamut mapping are notably:

- preservation of color neighborhood and order, absence of color banding and false contours, in order, notably, to prevent from incoherent reproduction of grey and color ramps;
- continuity of color and absence of visible quantization or clipping errors, in order, notably, to prevent from banding and false contours;
- separate control for lightness, hue and saturation for keeping the full artistic control on how colors are modified, and for allowing the formulation of a higher, semantic level of artistic intents.

In order to define a color gamut mapping, a **gamut boundary description (GBD)** of the source color gamut and of the target color gamut is generally used. Such a GBD of a color gamut defines the boundary surface of this color gamut in a color space. GBDs comprise generally explicit, generic 3D representations such as triangle meshes or volume models. For instance, a GBD of a color gamut can be based on a mesh of triangles, each triangle being defined by its three vertices in the color space of this GBD. These vertices are colors located on the boundary of the color gamut.

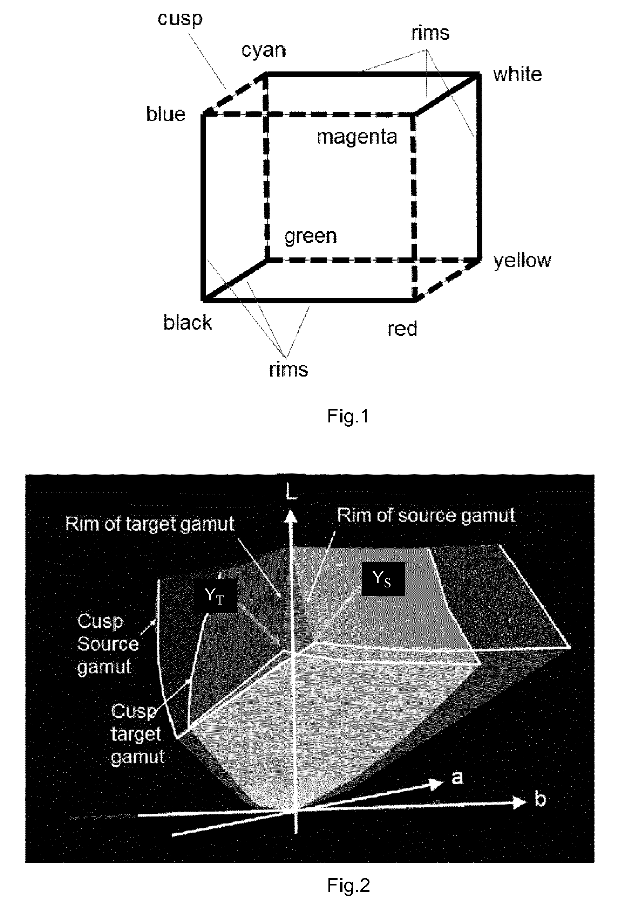

Figure 1 illustrates a source color gamut in a RGB color space of a color device. Such a color device can be for instance a display device or an image capture device, or a virtual device corresponding for instance to a standard, as BT.709. This source color gamut forms a cube having vertices formed by a black and white point, by three primary colors, respectively red, green and blue, and by three secondary colors, respectively yellow, cyan and magenta. Rim colors are colors located on a line linking the black or white point with any of the primary colors. Rim colors form rims shown as solid lines. Cusp colors are colors located on a line linking any of the primary colors with any of the secondary colors comprising this primary color. Cusp colors form cusp shown as dotted lines. A target color gamut can be represented similarly as a cube in a RGB color space.

Figure 2 illustrates the same source color gamut and target color gamut in a CIE Lab color space. When represented in polar coordinates (i.e. with a chroma C and a hue h instead of a and b), this color space allows to define 2D constant-hue leaves having axes for lightness and chroma. Rim lines and cusp lines of the source and target gamuts are shown on this figure.

US2005/248784 discloses a color gamut mapping method called shear mapping that maps in a constant-hue LC leaf the cusp color of the source gamut to the cusp color of the target gamut. However, after the shear mapping, other colors than the cusp colors may still lie outside of the target color gamut. For such a situation, US2005/248784 discloses to further map colors that lie outside the target color gamut to the closest colors of the target color gamut, see figure 10 of US2005/248784.

A drawback of usual gamut mapping method is that the mapping process is linear and thus cannot introduce specific mapping behavior for certain colors different from the mapping behavior of other colors.

Another drawback of this gamut mapping method operating in non-linear color space is that it does not map all colors from the source color gamut into the target color gamut.

Summary of invention

An object of the invention is to avoid the aforementioned drawbacks.

For this purpose, a subject of the invention is a method of color gamut mapping source colors of a content into target colors from a source color gamut towards a target color gamut in a 3D gamut mapping color space that can be partitioned in 2D constant-hue leaves having axes for lightness and chroma, comprising mapping each of said source colors in a constant-hue leaf having the hue of said source color such that the lightness L of this source color is lightness-mapped into a lightness L' of the corresponding target color and such that the chroma C of said source color is chroma-mapped into a chroma $C' = C_{\max}^{TARGET} \cdot g\left(\dfrac{C}{C_{\max}^{SOURCE}}\right)$ of the corresponding target color,

where $C_{\max}^{SOURCE}$ is the chroma of a color having the same lightness L as the source color and positioned on the boundary of the source color gamut in said constant-hue leaf,

where $C_{\max}^{TARGET}$ is the chroma of a color having the lightness L' of the corresponding target color and positioned on the boundary of the target color gamut in said constant-hue leaf,

wherein g() is a relative chroma mapping function which is defined at least for said constant hue leaf such as to be continuous and monotonically increasing from the interval [0,1] to the interval [0,1], non-linear, and independent from lightness of source colors within said constant hue leaf.

When using a linear relative chroma mapping function such as $g\left(\dfrac{C}{C_{\max}^{SOURCE}}\right) = k \cdot \dfrac{C}{C_{\max}^{SOURCE}}$, the ratio of chroma values C'/C is kept constant over all source colors having the same lightness L. In this case all colors are chroma mapped in a same way.

On the opposite, when using a **non-linear** relative chroma mapping function as in the above method, more control is **advantageously** obtained on how the chroma is changed during the mapping of source colors. It is possible for example to preserve the chroma of the low saturated source colors while changing more significantly the chroma of the high saturated source colors closer to the source cusp colors.

Advantages of this method may also include:

- This relative chroma mapping does not change with lightness. As a result, it is easier to design and to implement
- This relative chroma mapping allows to map most of the source colors from the source gamut into the target gamut (no post-processing or clipping required) notably when carried out in a specific color space.

Preferably, said relative chroma mapping function g() is polynomial with a degree higher or equal to 2.

Preferably, said polynomial relative chroma mapping function g() is expressed using Chebyshev polynomials.

In a first variant, lightness L of said source color is equal to lightness L' of said corresponding target color.

In a second variant, lightness L of said source color is different from lightness L' of said corresponding target color.

Preferably, lightness L of said source color is lightness-mapped into a lightness L' of the corresponding target color according to a lightness-mapping function defined in said constant hue leaf such that the lightness $L_{Cusp}^{SOURCE}$ of the source cusp color $N_{Cusp}^{SOURCE}$ of this constant hue leaf is lightness mapped into the lightness $L_{Cusp}^{TARGET}$ of the target cusp color $N_{Cusp}^{TARGET}$ of the same constant hue leaf.

Preferably, in said method of color mapping, lightness L of said source color is lightness-mapped into a lightness L' of the corresponding target color according to a lightness-mapping function, wherein said lightness-mapping function and said relative chroma mapping function g() are defined such as to keep constant the chroma/luminance ratio, i.e. such that C'/L' = C/L.

A subject of the invention is also an image processing device for mapping source colors of a content into target colors from a source color gamut towards a target color gamut in a 3D gamut mapping color space that can be partitioned in 2D constant-hue leaves having axes for lightness and chroma, comprising at least one processor configured for mapping each of said source colors according to the above method.

A subject of the invention is also an electronic device incorporating this image processing device. This electronic device is for instance a smartphone, a camera, a tablet, a TV set, a set-top-box, or a server.

A subject of the invention is also a computer program product comprising program code instructions to execute the steps of the above method, when this program is executed by at least one processor.

Brief description of drawings

The invention will be more clearly understood on reading the description which follows, given by way of non-limiting example and with reference to the appended figures in which:

- Figure 1 illustrates the cusp line and the rims of a color gamut in a RGB color space;
- Figure 2 illustrates a source color gamut and a target color gamut in the Lab color space;
- Figure 3 is a diagram illustrating an embodiment of a color gamut mapping method according to the invention;
- Figure 4 illustrates the mapping of a source color N into a target color N' using the embodiment of figure 3, without lightness mapping;
- Figure 5 illustrates the mapping of a source color N into a target color N" using the embodiment of figure 3, including a lightness mapping.

Description of embodiments

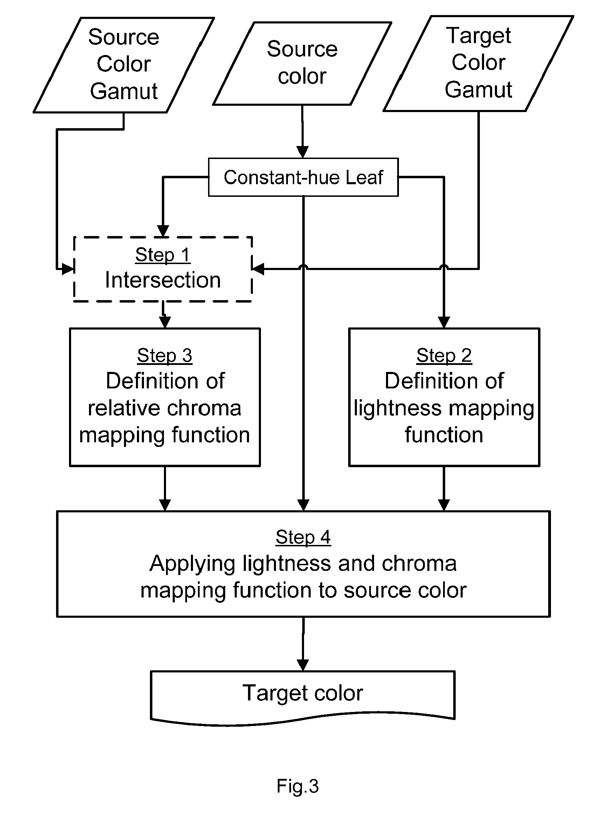

The functions of the various elements shown in the figures, notably figure 3, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage. Other hardware, conventional and/or custom, may also be included.

Moreover, the software may be implemented as an application program tangibly embodied on a program storage unit. The application program may be uploaded to, and executed by, a machine comprising any suitable architecture such as an image processing device which can be for instance included in a smartphone, a TV set, a tablet, a set-top-box, a gateway, a server, or any electronic device handling a color content. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as a display device, an additional data storage unit and/or a printing unit.

A specific non-limiting embodiment of the color gamut mapping method according to the invention applied to source colors of a content will now be described in reference to figure 3.

As **mapping color space,** the CIE 1976 Lab color space, or IPT color space can be chosen. A Lab color space is a color-opponent space that is perceptually uniform, with dimension L for lightness and a and b for the color-opponent dimensions. The red/green opponent primary colors are represented along the a axis, with green at negative a values and red at positive a values. The yellow/blue opponent secondary/primary colors are represented along the b axis, with blue at negative b values and yellow at positive b values.

Any other color-opponent color space can be used as a mapping color space, for instance the IPT color space, where I can be used in place of L, and P and T in place of a and b.

Instead of Lab or IPT color space, a simplified Lab color space, derived from the Lab color space, can be advantageously used. It is defined from CIE XYZ using the following formulas:

$$L_s = 100.\left(\frac{Y}{Y_n}\right)^{1/3}$$

$$a_s = 500.\left(\left(\frac{X}{X_n}\right)^{1/3} - \left(\frac{Y}{Y_n}\right)^{1/3}\right)$$

$$b_s = 200.\left(\left(\frac{Y}{Y_n}\right)^{1/3} - \left(\frac{Z}{Z_n}\right)^{1/3}\right)$$

($X_n$, $Y_n$ and $Z_n$ are the CIE XYZ values of the reference white point)

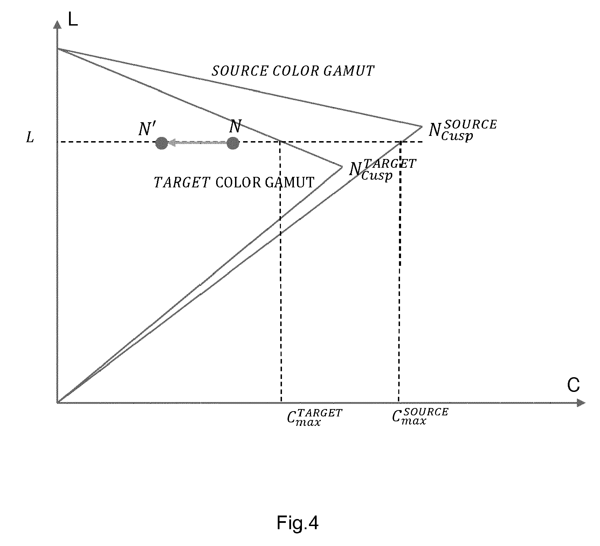

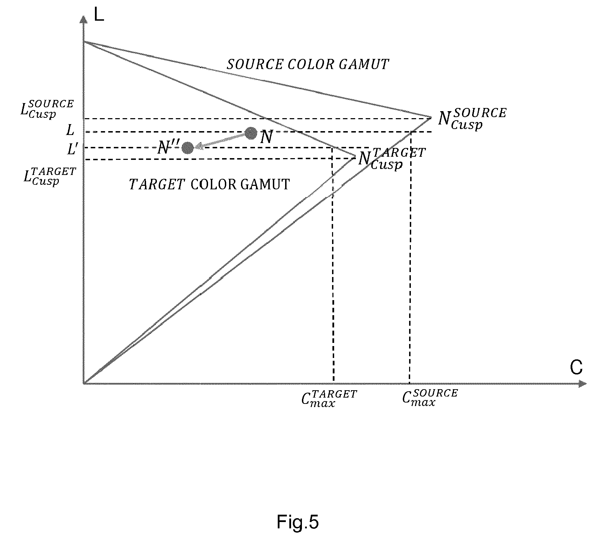

The advantage of this simplified Lab color space is that the borders of the gamut of standard emissive displays in each constant-hue leaf can be described by a straight line linking the origin with the cusp color of this constant-hue leaf. This advantage is also obtained for the IPT color space, and more generally it is obtained for any color space derived from CIE XYZ color space using positive homogenous functions, i.e. there is a real number k such that for any

color $\begin{pmatrix} X \\ Y \\ Z \end{pmatrix}$ and for any $\alpha > 0$, $f\begin{pmatrix} \alpha.X \\ \alpha.Y \\ \alpha.Z \end{pmatrix} = \alpha^k.f\begin{pmatrix} X \\ Y \\ Z \end{pmatrix}$). Such straight lines are illustrated on figures 4 and 5, where $N_{Cusp}^{SOURCE}$ and color $N_{Cusp}^{TARGET}$ are respectively a source cusp color and a target cusp color. The source cusp color (respectively the target cusp color) is defined as the source color (respectively the target color) having the maximum chroma in this constant hue leaf.

In this CIE 1976 Lab color space, colors can also be represented by polar coordinates, i.e. in a LCh mode, with L for the same lightness, the hue angle h according to

$$h = \begin{cases} atan\left(b/a\right) & a > 0 \wedge b > 0 \\ \pi/2 - atan\left(a/b\right) & a \leq 0 \wedge b > 0 \\ 3\pi/2 - atan\left(a/b\right) & a > 0 \wedge b \leq 0 \\ \pi + atan\left(b/a\right) & a \leq 0 \wedge b \leq 0 \end{cases}$$

i.e., in a plane of constant lightness L, the angle between the vector having a, b as coordinates and the a-axis, $C = \sqrt{a^2 + b^2}$ corresponding to the chroma. For a given lightness, the higher the C value, the more saturated the color. Other color spaces such as the appearance-based space JCh according to CIECAM-02 can be used for the mapping.

Furthermore, the mapping method is described in the context of a hue-preserving color gamut mapping. This means that the mapping of a source color will not actually be carried out in three dimensions in the mapping color space but in two dimensions in a constant-hue leaf of this mapping color space comprising this source color, i.e. in a 2D LC color space.

The **source color gamut** in which source colors to map are all included is generally associated with a source color device which can for instance correspond to a specific or standard display device such as a LCD or an OLED panel, or to an image capture device such as a camera or a scanner, or to any other actual or virtual color device.

Alternatively, this source color gamut can be associated with the content to map.

The **target color gamut** in which source colors are to be mapped is generally associated with a target color device which can correspond for instance to another specific or standard display device or to a printer.

Furthermore, the primary colors, the secondary colors, the black point and the white point of the source and target color gamuts are supposed to be known.

Lightness, chroma and hue of each source color to map are generally calculated in a manner known per se from device-dependent color coordinates representing these source colors in a device-dependent color space associated with the source color device.

Assuming that each source color of the content to map is represented in the mapping color space Lch by the following coordinates: $N = \begin{pmatrix} L \\ C \\ h \end{pmatrix}$, we will now describe how to map this source color into a corresponding target color using the following steps.

1<sup>st</sup> step (optional): intersection of the constant-hue leaf with the source and target color gamut:

For each constant hue leaf in which there are at least one source color to chroma map, a source maximum-chroma line is defined as the intersection of the boundary of the source color gamut with this constant hue leaf. Such an intersection can be computed in a manner known per se by using the GBD defining this source color gamut (see above). Similarly, a target maximum-chroma line is defined as the intersection of the boundary of the target color gamut with this constant hue leaf. Such an intersection can be computed in a manner known per se by using the GBD defining this target color gamut (see above).

As already emphasized above, in a constant-hue leaf of an appropriate mapping color space as the IPT color space and the simplified Lab color space and notably for standard emissive displays, these source and target maximum-chroma lines can generally be described by straight lines linking the origin with, respectively, a source cusp color $N_{Cusp}^{SOURCE}$ and a target cusp color $N_{Cusp}^{TARGET}$: see figure 4 and 5.

2<sup>nd</sup> step: definition of a lightness mapping function:

A lightness mapping function is defined such as to be able to map the lightness L of any source color into the lightness L' of its corresponding target color.

In a specific variant, the lightness mapping function is an identity function (L' = f(L) = L).

Preferably, a specific lightness mapping function f(L,C) is defined in each constant hue leaf such that L'= f(L,C) ≠L.

Advantageously, in this constant hue leaf, this lightness mapping function f(L,C) is defined as an increasing function that maps the lightness $L_{Cusp}^{SOURCE}$ of the source cusp color $N_{Cusp}^{SOURCE}$ of this constant hue leaf into the lightness $L_{Cusp}^{TARGET}$ of the target cusp color $N_{Cusp}^{TARGET}$ of the same constant hue leaf. This condition is used in what is generally named **"cusp mapping"**. In this case, in a constant hue leaf, since the lightness mapping function is an increasing function mapping the lightness of the source cusp color of this leaf to the lightness of the target cusp color of the same leaf, source colors on the lower part (resp. upper part) of the source color gamut (i.e. below (resp. above) the source cusp color) are mapped to target colors on the lower part (resp. upper part) of the target color gamut (i.e. below (resp. above) the target cusp color).

As an example of such lightness mapping function, in a constant hue leaf the following definition can be used, using the chroma $C_{Cusp}^{SOURCE}$ of the source cusp color $N_{Cusp}^{SOURCE}$ of this constant hue leaf:

$$f(C, L) = L + \left(L_{Cusp}^{TARGET} - L_{Cusp}^{SOURCE}\right) \cdot \frac{C}{C_{Cusp}^{SOURCE}}$$

A specific advantage of using this exemplary lightness mapping function will be described in step 4.

Any other lightness mapping function f() can be used to implement the invention.

3rd step: definition of a relative chroma mapping function:

A relative chroma mapping function g() is then defined for each leaf of constant hue h in which there are at least one source color to chroma map. This relative chroma mapping function g() aims at mapping the chroma C of any source color into the chroma C' of its corresponding target color, such that:

$$C' = C_{\max}^{TARGET} . g\left(\frac{C}{C_{\max}^{SOURCE}}\right)$$

$C_{\max}^{SOURCE}$ is defined in this constant-hue leaf as the chroma of a color having the same lightness L as the source color and positioned on the boundary of the source color gamut. Using step 1 above, it can be defined as the chroma of a color positioned at the intersection of a line of constant lightness L with the source maximum-chroma line defined in step 1 above. This chroma is named "source maximum chroma of the source color".

$C_{\max}^{TARGET}$ is defined in this constant-hue leaf as the chroma of a color having the same lightness L' of the target color corresponding to the source color and positioned on the boundary of the target color gamut. This lightness L' is obtained by applying the lightness mapping function of step 2 to the lightness L and the chroma C of the source color. Using step 1 above, it can be defined as the chroma of a color positioned at the intersection of a line of constant lightness L' with the target maximum-chroma line defined in step 1 above. This chroma is named "target maximum chroma of the target color".

According to the invention, this relative chroma mapping function g() defined in a constant hue leaf is continuous and monotonically increasing from the interval [0,1] to the interval [0,1], non-linear, and independent from the lightness of source colors included in this constant hue leaf. This relative chroma mapping function g() may be linear on a smaller interval included in the interval [0,1]. This smaller interval might correspond to colors with small relative chroma value, for example it might be equal to [0,0.1] or to [0,0.5].

Such a definition of the relative chroma mapping function g() ensures that the chroma mapped colors are within the target color gamut since g() is a function mapping the (relative) interval [0,1] to a (relative) interval included in [0,1], which means that the chroma of any source color (chroma value in the interval $[0, C_{max}^{SOURCE})$ will always be mapped to a chroma value in the interval $[0, C_{max}^{TARGET}]$.

Preferably, this relative chroma mapping function g() is polynomial.

Preferably, the degree of this polynomial relative chroma mapping function g() is higher than or equal to 2.

As an example of definition of such a polynomial relative chroma mapping function, we have:

$$g : [0,1] \rightarrow [0,1]$$

$$x \rightarrow (1-\alpha).x^2 + \alpha.x$$

$$\text{i.e.: } g\left(\frac{C}{C_{max}^{SOURCE}}\right) = (1-\alpha).\left(\frac{C}{C_{max}^{SOURCE}}\right)^2 + \alpha.\left(\frac{C}{C_{max}^{SOURCE}}\right)$$

where $\alpha$ is defined as an average, in the constant hue leaf, of the ratio $\frac{C_{\max}^{SOURCE}}{C_{\max}^{TARGET}}$ over all colors sampling the portion of the constant hue leaf included in the source color gamut, with the same definition of $C_{\max}^{SOURCE}$ and $C_{\max}^{TARGET}$ as above for a source color.

For sampling the portion of the constant hue leaf (hue=h): knowing the lightness of the white point ($L_{max}$), one can define two integers m and n, a chroma step $(\delta_C = C_{Cusp}^{SOURCE}/m)$ and a lightness step ($\delta_L = L_{max}/n$), and use as

sample every color $\begin{pmatrix} L = j.\delta_L \\ C = k.\delta_C \\ h \end{pmatrix}$ included in said source color gamut with j in [0,m] and k in [0,n].

An advantage of having $\alpha$ equal to an average of the ratio $\dfrac{C_{\max}^{SOURCE}}{C_{\max}^{TARGET}}$ is that, in average, for the low values of relative chroma, the chroma mapped chroma C' will be close to the chroma C of the source color to map.

Alternatively, instead of averaging the ratio $\dfrac{C_{\max}^{SOURCE}}{C_{\max}^{TARGET}}$ over all colors sampling the portion of the constant hue leaf as above, it is possible to average this ratio over all colors sampling the source color gamut. In this situation, we have only one value of $\alpha$ common to all constant hue leaves and only one relative chroma mapping function defined for all source colors to map, whatever are their hues. Applying this single relative chroma mapping function to all source colors of the source color gamut keeps the chroma constant in average for the source color having small saturation values.
A specific advantageous way to express the above polynomial relative chroma mapping function will now be considered. It is known that an arbitrary polynomial of degree k can be written using the k first Chebyshev polynomials of the first kind. Such polynomials have an advantage over the above canonical form. For example, the values the Chebyshev polynomials take for a given value in [-1,1] have a same magnitude (while the values taken by $x^k$ have different magnitudes for small x values). As using Chebyshev polynomials $T_0, T_1 ... T_k$ of the first kind is formally equivalent to using a canonical polynomial of degree k, the relative chroma mapping function g() above can be advantageously re-written according to the following formula:

$$g(x) = \frac{(1-\alpha)}{2}.T_2(x) + \alpha.T_1(x) + \frac{(1-\alpha)}{2}.T_0(x)$$

The formula of the first Chebyshev polynomials of the first kind are:

$$T_0(x) = 1$$

$$T_1(x) = x$$

The next Chebyshev polynomials can be evaluated using this formula:

$$T_{n+1}(x) = 2.x.T_n(x) - T_{n-1}(x)$$

The formula of the first following Chebyshev polynomials of the first kind are:

$$T_2(x) = 2.x^2 - 1$$

$$T_3(x) = 4.x^3 - 3.x$$

$$T_4(x) = 8.x^4 - 8.x^2 + 1$$

$$T_5(x) = 16.x^5 - 20.x^3 + 5.x$$

$$T_6(x) = 32.x^6 - 48.x^4 + 18.x^2 - 1$$

With the above definition of g(), whatever Chebyshev polynomials of the first kind are used or not, for low values of relative chroma, we have:

$$g\left(\frac{C}{C_{max}^{SOURCE}}\right) \approx \alpha.\left(\frac{C}{C_{max}^{SOURCE}}\right)$$

$$\frac{C'}{C_{max}^{TARGET}} \approx \alpha.\left(\frac{C}{C_{max}^{SOURCE}}\right)$$

$$C' \approx \alpha.\left(\frac{C_{max}^{TARGET}}{C_{max}^{SOURCE}}\right).C$$

In the specific case (described in step 1 above) where, in the constant-hue leaf, the source and target maximum-chroma lines are described by straight lines, the $\dfrac{C_{max}^{SOURCE}}{C_{max}^{TARGET}}$ ratio is constant on the lower part of each constant-hue leaf (i.e. below the cusp color), and roughly constant on the upper part (i.e. above the cusp color). In this case C' are even closer to C for the low values of relative chroma. In this situation, the value $C_{max}^{SOURCE}$ (resp. $C_{max}^{TARGET}$) can be accurately determined using a linear interpolation if the source color is in the lower part of the constant-hue leaf (i.e. below the cusp color of the source (resp. target) color gamut), and this value can be approximated by another linear interpolation if the source color is in the upper part (i.e. above the cusp color).

4$^{th}$ step: mapping source colors using the relative chroma mapping function and the lightness mapping function:

Assuming that each source color to map is represented in the mapping color space Lch by the following coordinates: $N = \begin{pmatrix} L \\ C \\ h \end{pmatrix}$, the relative chroma mapping function $g\left(\dfrac{C}{C_{max}^{SOURCE}}\right)$ as defined above in the leaf of hue h is then applied to the ratio of the chroma C of the source color to map by the chroma $C_{max}^{SOURCE}$, resulting, when multiplied by the chroma $C_{max}^{TARGET}$, into a mapped chroma $C' = C_{max}^{TARGET}.g\left(\dfrac{C}{C_{max}^{SOURCE}}\right)$.

When the lightness mapping function defined in step 2 above is an identity function f(L,C) = L, the final color that is obtained is a target color N' having the following coordinates $N' = \begin{pmatrix} L' = L \\ C' = C_{max}^{TARGET}.g\left(\dfrac{C}{C_{max}^{SOURCE}}\right) \\ h \end{pmatrix}$. Such a mapping is illustrated on figure 4.

Alternatively, when the lightness mapping function defined in step 2 above is not an identity function (f(L,C) $\neq$ L), applying this lightness mapping function f() will then give a final color having the following coordinates

$$N'' = \left( \begin{array}{c} L' = f(L,C) \\ C' = C_{\max}^{TARGET} \cdot g\left( \dfrac{C}{C_{\max}^{SOURCE}} \right) \\ h \end{array} \right)$$ . Such a mapping is illustrated on figure 5.

When using an increasing lightness mapping function mapping the lightness of the source cusp color to the lightness of the target cusp color as described in a variant of step 2 above, source colors on the lower part (resp. upper part) of the source color gamut are mapped to target colors on the lower part (resp. upper part) of the target color gamut. This means that for the chroma mapping, only two cases can be considered:

- source color in the lower part of the source color gamut, and
- source color in the upper of the source color gamut.

In a more generic case (the lightness of the source cusp color not mapped to the lightness of the target cusp color), three cases can be considered:

- source color in the lower part of the source color gamut with a corresponding target color in the lower of the target color gamut;
- source color in the lower part of the source color gamut with a corresponding target color in the upper part of the target color gamut, or source color in the upper part of the source color gamut with a corresponding target color in the lower part of the target color gamut;
- source color in the upper part of the source color gamut with a corresponding target color in the upper of the target color gamut.

A specific advantage of using the exemplary lightness mapping function described in step 2 above $\left( f(C,L) = L + \left( L_{Cusp}^{TARGET} - L_{Cusp}^{SOURCE} \right) \cdot \dfrac{C}{C_{Cusp}^{SOURCE}} \right)$ is achieved when in the constant-hue leaf, the source and target maximum-chroma lines are described by straight lines (specific case described in step 1 above).

In this case, in the constant-hue leaf the $\dfrac{C_{\max}^{SOURCE}}{C_{\max}^{TARGET}}$ ratio is constant on the lower part of the source color gamut (i.e. below the source cusp color) and is equal to $\dfrac{C_{Cusp}^{SOURCE}}{C_{Cusp}^{TARGET}}$, and roughly constant and equal to the same value $\left( \dfrac{C_{Cusp}^{SOURCE}}{C_{Cusp}^{TARGET}} \right)$ on the upper part (i.e. above the source cusp color). This means that the two cases defined above can be considered as a single case; and this implies that in the constant-hue leaf the ratio between the chroma of the source color and the chroma of the target color depends only on the relative chroma value of the source color. This eases the definition of the relative chroma mapping function.

In the mapping method described above, the application of the relative chroma-mapping function and that of the lightness mapping function can be switched.

Advantageously, notably when the lightness mapping function is applied first, the relative chroma mapping function is then applied within each constant hue leaf after compensating for the change of the chroma/luminance ratio ($^{C}/_{L}$) induced by the application of the lightness mapping function. Applying this chroma/luminance ratio preserving compensation to the chroma will then give a final color having the following coordinates

$$N'' = \left( \begin{array}{c} L' = f(L,C) \\ C' = C_{\max}^{TARGET} \cdot g\left( \dfrac{C \cdot f(L,C)}{C_{\max}^{SOURCE} \cdot f(L, C_{\max}^{SOURCE})} \right) \\ h \end{array} \right)$$

An advantage of using a chroma/luminance ratio preserving compensation is that the color mapping better preserves the saturation.

For example, if in a constant-hue leaf, the source and the target cusp colors only differ by their lightness:

- Using the lightness mapping will map all source colors to target colors, and thus the chroma mapping will not further need to change the colors, leaving the chroma values unchanged. This will lead to overall increased saturation (in case the lightness of the target cusp color is smaller than the lightness of the source cusp color) or to overall decreased saturation (in case the lightness of the target cusp color is bigger than the lightness of the source cusp color).

- Using the chroma/luminance ratio preserving compensation: the chroma/luminance ratio preserving compensation will alter the chroma to compensate for the change of the chroma/luminance ratio ($^{C}/_{L}$) induced by the lightness mapping function leaving the saturation unchanged. In this case, the chroma mapping can better control what happens to the saturation. For example, as seen previously, it can keep constant the lower values of saturation, and only alter (increase or decrease) the bigger values of saturation.

As a **conclusion** of the **mapping** of all source colors of the content to map, the implementation of the above first to fourth steps leads to a global color gamut mapping of these source colors from the source color gamut in which they are located into target colors in the target color gamut.

In a variant of the invention, the lightness L of each source color is lightness-mapped into a lightness L' of its corresponding target color according to a lightness-mapping Look Up Table.

When it is desired to preserve even further the chroma of the source colors, instead of using the relative chroma mapping function as defined in step 2 of the embodiment above, one can use a continuous piecewise defined relative chroma mapping function defined as follows :

$$g(x) = \begin{cases} \alpha.x & if\ x \le {}^1/_2 \\ 2.(1-\alpha).x^2 + (2.\alpha - 1).x & if\ x > {}^1/_2 \end{cases}$$

Such a mapping function is linear in the interval [0, ½] but non linear in the interval [1/2, 1].

Such a mapping function can be approximated by a polynomial function; for example for $\alpha$ = 1.3:

$$g(x) = -5.984.x^6 + 18.82.x^5 - 21.53.x^4 + 10.28.x^3 - 2.011.x^2 + 1.425.x$$

This chroma mapping function can also be expressed using Chebyshev polynomials of the first kind:

$$g(x) = -0.187.T_6(x) + 1.176.T_5(x) - 3.813.T_4(x) + 8.450.T_3(x) - 14.575.T_2(x)$$
$$+ 20.898.T_1(x) - 10.949.T_0(x)$$

Alternatively, the relative chroma mapping function can be a polynomial function (which can also be expressed using Chebyshev polynomials of the first kind) approximating another chroma mapping function, or approximating mapped chroma values (e.g. from a color Look-Up Table). The polynomial coefficients can be determined using a known approximation method, typically a curve fitting method like a polynomial regression.

According to a **hardware aspect,** the invention relates to an image processing device for mapping source colors of a content which are provided in a source color gamut into targets colors of a target color gamut.

This image processing device comprises at least one processor configured to implement the above mapping method.

The different steps of this mapping method which are processed by the at least one processor of the image processing device may or may not correspond to physically distinguishable units in the device.

This image processing device can be implemented according to a purely hardware embodiment, for example in the form of a dedicated component (for example in an ASIC (application specific integrated circuit) or FPGA (field-programmable gate array) or VLSI (very large scale integration) or of several electronic components integrated into the image processing device or even in the form of a mixture of hardware elements and software elements.

While the present invention is described with respect to a particular embodiment, it is understood that the present invention is not limited to this embodiment. The present invention as claimed therefore includes variations from this embodiment described herein, as will be apparent to one of skill in the art.

It is to be further understood that, because some of the constituent system components and methods depicted in the accompanying drawings are preferably implemented in software, the actual connections between the system components or the process function blocks may differ depending upon the manner in which the invention is implemented.

**Claims**

1.  Method of color gamut mapping source colors of a content into target colors from a source color gamut towards a target color gamut in a 3D gamut mapping color space that can be partitioned in 2D constant-hue leaves having axes for lightness and chroma, comprising mapping each of said source colors in a constant-hue leaf having the hue of said source color such that the lightness L of this source color is lightness-mapped into a lightness L' of the corresponding target color and such that the chroma C of said source color is chroma-mapped into a chroma

    $$C' = C_{\max}^{TARGET} \cdot g\left( \frac{C}{C_{\max}^{SOURCE}} \right)$$ of the corresponding target color, where $C_{\max}^{SOURCE}$ is the chroma of a color having the same lightness L as the source color and positioned on the boundary of the source color gamut in said constant-hue leaf,

    where $C_{\max}^{TARGET}$ is the chroma of a color having the lightness L' of the corresponding target color and positioned on the boundary of the target color gamut in said constant-hue leaf,

    wherein g() is a relative chroma mapping function which is defined at least for said constant hue leaf such as to be continuous and monotonically increasing from the interval [0,1] to the interval [0,1], non-linear, and independent from lightness of source colors within said constant hue leaf.

2.  Method of color gamut mapping according to claim 1 **characterized in that** said relative chroma mapping function g() is polynomial with a degree higher or equal to 2.

3.  Method of color gamut mapping according to claim 2 **characterized in that** said polynomial relative chroma mapping function g() is expressed using Chebyshev polynomials.

4.  Method of color gamut mapping according to any one of claims 1 to 3 **characterized in that** lightness L of said source color is equal to lightness L' of said corresponding target color.

5.  Method of color gamut mapping according to any one of claims 1 to 3 **characterized in that** lightness L of said source color is lightness-mapped into a lightness L' of the corresponding target color according to a lightness-mapping function defined in said constant hue leaf such that the lightness $L_{Cusp}^{SOURCE}$ of the source cusp color

    $N_{Cusp}^{SOURCE}$ of this constant hue leaf is lightness mapped into the lightness $L_{Cusp}^{TARGET}$ of the target cusp color

    $N_{Cusp}^{TARGET}$ of the same constant hue leaf.

6.  Method of color gamut mapping according to any one of claims 1, 2, 3 or 5 **characterized in that** lightness L of said source color is lightness-mapped into a lightness L' of the corresponding target color according to a lightness-mapping function, wherein said lightness-mapping function and said relative chroma mapping function g() are defined such as to keep constant the chroma/luminance ratio.

7.  Image processing device for mapping source colors of a content into target colors from a source color gamut towards a target color gamut in a 3D gamut mapping color space that can be partitioned in 2D constant-hue leaves having axes for lightness and chroma, comprising at least one processor configured for mapping each of said source colors in a constant-hue leaf having the hue of said source color such that the lightness L of this source color is lightness-mapped into a lightness L' of the corresponding target color and such that the chroma C of said source color is chroma-mapped into a chroma $C' = C_{\max}^{TARGET} . g\left( \dfrac{C}{C_{\max}^{SOURCE}} \right)$ of the corresponding target color,

where $C_{\max}^{SOURCE}$ is the chroma of a color having the same lightness L as the source color and positioned on the boundary of the source color gamut in said constant-hue leaf,

where $C_{\max}^{TARGET}$ is the chroma of a color having the lightness L' of the corresponding target color and positioned on the boundary of the target color gamut in said constant-hue leaf,

wherein g() is a relative chroma mapping function which is defined at least for said constant hue leaf such as to be continuous and monotonically increasing from the interval [0,1] to the interval [0,1], non-linear, and independent from lightness of source colors within said constant hue leaf.

8. Image processing device according to claim 7, wherein said relative chroma mapping function g() is polynomial with a degree higher or equal to 2.

9. Image processing device according to claim 7 or 8, wherein lightness L of said source color is equal to lightness L' of said corresponding target color.

10. Image processing device according to claim 7 or 8, wherein lightness L of said source color is lightness-mapped into a lightness L' of the corresponding target color according to a lightness-mapping function defined in said constant hue leaf such that the lightness ( $L_{Cusp}^{SOURCE}$ ) of the source cusp color ( $N_{Cusp}^{SOURCE}$ ) of this constant hue leaf is lightness mapped into the lightness ( $L_{Cusp}^{TARGET}$ ) of the target cusp color ( $N_{Cusp}^{TARGET}$ ) of the same constant hue leaf.

11. Image processing device according to claim 7 or 8, wherein lightness L of said source color is lightness-mapped into a lightness L' of the corresponding target color according to a lightness-mapping function, wherein said lightness-mapping function and said relative chroma mapping function g() are defined such as to keep constant the chroma/luminance ratio, i.e. such that C'/L' = C/L.

12. Electronic device incorporating an image processing device according to any one of claims 7 to 11.

13. Computer program product comprising program code instructions to execute the steps of the method according to any one of the claims 1 to 6, when this program is executed by at least one processor.

Fig.1

Fig.2

Source
Color
Gamut

Source
color

Target
Color
Gamut

Constant-hue Leaf

Step 1
Intersection

Step 3
Definition of
relative chroma
mapping function

Step 2
Definition of
lightness mapping
function

Step 4
Applying lightness and chroma
mapping function to source color

Target color

Fig.3

Fig.4

$L$

$L_{Cusp}^{SOURCE}$

$L$

$L'$

$L_{Cusp}^{TARGET}$

SOURCE COLOR GAMUT

$N_{Cusp}^{SOURCE}$

$N''$ $N$

$N_{Cusp}^{TARGET}$

TARGET COLOR GAMUT

$C_{max}^{TARGET}$ $C_{max}^{SOURCE}$

$C$

Fig.5

Europäisches
Patentamt

European
Patent Office

Office européen
des brevets

# EUROPEAN SEARCH REPORT

Application Number

EP 16 30 6248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/062355 A1 (KONINKL PHILIPS ELECTRONICS NV [NL]; MUIJS REMCO T J [NL]; KUANG JIANG) 29 May 2008 (2008-05-29) <br> * page 12, line 10 - page 13, line 13; figures 1, 4 * <br> * page 15, line 3 - line 30; figure 8 * | 1-3,7,8, 12,13 | INV. <br> H04N1/60 <br> H04N9/67 |
| X | US 5 696 839 A (SIEGERITZ HELMUT [DE]) 9 December 1997 (1997-12-09) | 1,4,5,7, 9,10,12, 13 | |
| A | * column 7, line 48 - column 17, line 25; figures 8-14 * | 2,3,6,8, 11 | |
| A | US 6 775 028 B1 (REEL RICHARD LEE [US]) 10 August 2004 (2004-08-10) <br> * column 4, line 7 - column 5, line 33; figures 7-9 * | 1-13 | |
| A | LEE K-Y ET AL: "General chromaticity compression function for gamut mapping", ELECTRONICS LETTERS, IEE STEVENAGE, GB, vol. 43, no. 5, 1 March 2007 (2007-03-01), pages 276-277, XP006028228, ISSN: 0013-5194, DOI: 10.1049/EL:20073039 <br> * the whole document * | 1-13 | TECHNICAL FIELDS SEARCHED (IPC) <br><br> H04N |
| A,D | MOROVIC J ET AL: "THE FUNDAMENTALS OF GAMUT MAPPING: A SURVEY", JOURNAL OF IMAGING SCIENCE AND TECHNOLOGY, SPIE - THE INTERNATIONAL SOCIETY FOR OPTICAL ENGINEERING, US, vol. 45, no. 3, 1 May 2001 (2001-05-01), pages 283-290, XP008017721, ISSN: 1062-3701 <br> * Section "Gamut Compression"; page 286, right-hand column; figure 3 * | 1-13 | |

The present search report has been drawn up for all claims

| Place of search | Date of completion of the search | Examiner |
|---|---|---|
| Munich | 22 March 2017 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6248

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2017

| Patent document cited in search report | | | Publication date | Patent family member(s) | | | Publication date |
|---|---|---|---|---|---|---|---|
| WO 2008062355 | A1 | | 29-05-2008 | CN | 101543039 | A | 23-09-2009 |
| | | | | EP | 2087721 | A1 | 12-08-2009 |
| | | | | JP | 2010511314 | A | 08-04-2010 |
| | | | | KR | 20090087084 | A | 14-08-2009 |
| | | | | US | 2010110312 | A1 | 06-05-2010 |
| | | | | WO | 2008062355 | A1 | 29-05-2008 |
| US 5696839 | A | | 09-12-1997 | NONE | | | |
| US 6775028 | B1 | | 10-08-2004 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005248784 A

**Non-patent literature cited in the description**

- **J. MOROVIC ; M. R. LUO.** The Fundamentals of Gamut Mapping: A Survey. *Journal of Imaging Science and Technology,* 2001, vol. 45 (3), 283-290
- **MONTAG E. D. ; FAIRCHILD M. D.** Psychophysical Evaluation of Gamut Mapping Techniques Using Simple Rendered Images and Artificial Gamut Boundaries. *IEEE Trans. Image Processing,* 1997, vol. 6, 977-989
- **P. ZOLLIKER ; M. DÄTWYLER ; K. SIMON.** On the Continuity of Gamut Mapping Algorithms, Color Imaging X: Processing, Hardcopy, and Applications. Proceedings of the SPIE, 2004, vol. 5667, 220-233